# EUROPÄISCHE PATENTSCHRIFT

(11) **EP 1 908 162 B1**
(45) Veröffentlichungstag und Bekanntmachung des Hinweises auf die Patenterteilung: **20.03.2013**
(21) Anmeldenummer: 06762195.3
(22) Anmeldetag: 27.06.2006
(51) Int. Cl.: H02K 29/08

(54) **BÜRSTENLOSER ELEKTROMOTOR**
BRUSHLESS ELECTRIC MOTOR
MOTEUR ELECTRIQUE SANS BALAI

(30) Priorität: 26.07.2005 DE 102005036132
(43) Veröffentlichungstag der Anmeldung: 09.04.2008
(73) Patentinhaber: ebm-papst St. Georgen GmbH & Co. KG, 78112 St. Georgen (DE)
(72) Erfinder: RUDEL, Christian, 78126 Königsfeld (DE); HORNBERGER, Joerg, 72280 Dornstetten-Aach (DE); SCHAEUBLE, Michael, D-78112 St. Georgen (DE)
(74) Vertreter: Raible, Tobias
(86) Internationale Anmeldenummer: PCT/EP2006/006156
(87) Internationale Veröffentlichungsnummer: WO 2007/012370

(56) Entgegenhaltungen:
- DE-A1- 10 003 129
- FR-A- 2 631 178
- US-A- 4 317 072
- US-A1- 2003 146 727

## Beschreibung

Die Erfindung betrifft einen Elektromotor zur Erfassung einer Rotorstellung und insbesondere des Absolutwertes einer Rotorstellung.

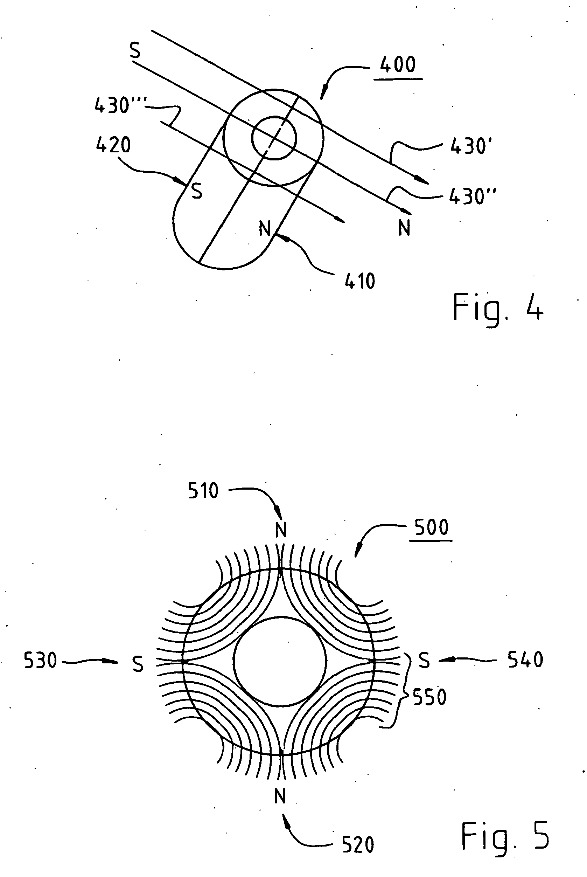

Aus der WO 2004/059830 A2 ist eine Rotorstellungssensoranordnung für einen Elektromotor mit einem mehrpoligen Sensormagneten bekannt, bei der ein Rotorstellungssignal in einen digitalen Wert mit einer Auflösung von 2 Bit umgewandelt wird. Dieser digitale Wert ermöglicht es, auch innerhalb des Winkelbereichs eines Sensorpols, z.B. in der nachfolgenden Fig. 5 innerhalb des Bereichs 550, Informationen aus dem Rotorstellungssignal zu erhalten, sodass ein Absolutwert für die Rotorstellung erzeugt werden kann.

Aus der US 2003/0146727 ist eine weitere Rotorstellungsensoranordnung für einen Electromotor bekannt

Es ist deshalb eine Aufgabe der vorliegenden Erfindung, eine neue Anordnung zur Erfassung der Rotorstellung in einem Elektromotor bereitzustellen.

Diese Aufgabe wird durch einen Elektromotor gemäß Anspruch 1 gelöst. Dieser Elektromotor weist einen Stator, einen Rotor mit einer Rotorwelle und einem Rotormagneten, einen drehfest auf der Welle angeordneten Magnetring und mindestens einen Rotorstellungssensor auf.

Der Rotormagnet hat n Polpaare. Der Magnetring ist zumindest teilweise zwischen der Rotorwelle und dem mindestens einen Rotorstellungssensor angeordnet, und er ist derart magnetisiert, dass er maximal n Polpaare hat und sich an seinem Umfang ein im Wesentlichen sinusförmiger magnetischer Flussverlauf ergibt. Der mindestens eine Rotorstellungssensor dient zur Erzeugung eines analogen Signals, welches eine Eigenschaft des magnetischen Flusses abbildet und zur Bestimmung eines Absolutwerts der Rotorstellung geeignet ist.

Man erhält so einen Elektromotor mit einer Rotorstellungsanordnung, welche es ermöglicht, zu jedem Zeitpunkt den Absolutwert der Rotorstellung des Motors zu bestimmen.

Bevorzugt hat der Elektromotor einen Stator mit einem Lagerrohr, einen Rotor mit einer Rotorwelle, einen Magnetring, und mindestens einen Rotorstellungssensor. Das Lagerrohr ist aus einem magnetisch transparenten Material ausgebildet, z. B. aus Aluminiumdruckguss. Die Rotorwelle ist zumindest teilweise in dem Lagerrohr angeordnet. Der Magnetring ist drehfest auf der Welle angeordnet und ebenfalls zumindest teilweise innerhalb des Lagerrohrs angeordnet. Der mindestens eine Rotorstellungssensor ist außerhalb des Lagerrohrs angeordnet und dient zur Erzeugung eines Rotorstellungssignals in Abhängigkeit von der Drehstellung des Magnetrings. Man erhält so einen Motor mit einer Rotorstellungsanordnung, welche es ermöglicht, zu jedem Zeitpunkt den Absolutwert der Rotorstellung des Motors zu bestimmen.

Weitere Einzelheiten und vorteilhafte Weiterbildungen der Erfindung ergeben sich aus den im Folgenden beschriebenen und in den Zeichnungen dargestellten, in keiner Weise als Einschränkung der Erfindung zu verstehenden Ausführungsbeispielen. Es zeigt:
- Fig. 1: ein Blockdiagramm einer bevorzugten Ausführung eines ECM mit einer Rotorstellungssensoranordnung,
- Fig. 2: einen vergrößerten Längsschnitt durch einen beispielhaften Außenläufermotor, der mit einer erfindungsgemäßen Rotorstellungssensoranordnung versehen ist,
- Fig. 3: einen Schnitt entlang der Linie I - I in Fig. 2 in vergrößertem Maßstab,
- Fig. 4: eine perspektivische Ansicht einer ersten Ausführungsform des zweipoligen Sensormagneten aus Fig. 2 und 3,
- Fig. 5: eine schematische Darstellung des Magnetfeldes eines vierpoligen Sensormagneten gemäß einer zweiten Ausführungsform der Erfindung,
- Fig. 6: eine Draufsicht auf eine bevorzugte Sensormagnetringanordnung,
- Fig. 7: einen Schnitt durch die Sensormagnetringanordnung entlang der Linie VII-VII aus Fig. 6,
- Fig. 8: einen vergrößerten Längsschnitt durch einen beispielhaften Innenläufermotor, der mit einer erfindungsgemäßen Rotorstellungssensoranordnung versehen ist, und
- Fig. 9: einen Schnitt entlang der Linie II - II aus Fig. 8 in vergrößertem Maßstab.

In der nachfolgenden Beschreibung beziehen sich die Begriffe links, rechts, oben und unten auf die jeweilige Zeichnungsfigur und können in Abhängigkeit von einer jeweils gewählten Ausrichtung (Hochformat oder Querformat) von einer Zeichnungsfigur zur nächsten variieren. Gleiche oder gleich wirkende Teile werden in den verschiedenen Figuren mit denselben Bezugszeichen bezeichnet und gewöhnlich nur einmal beschrieben.

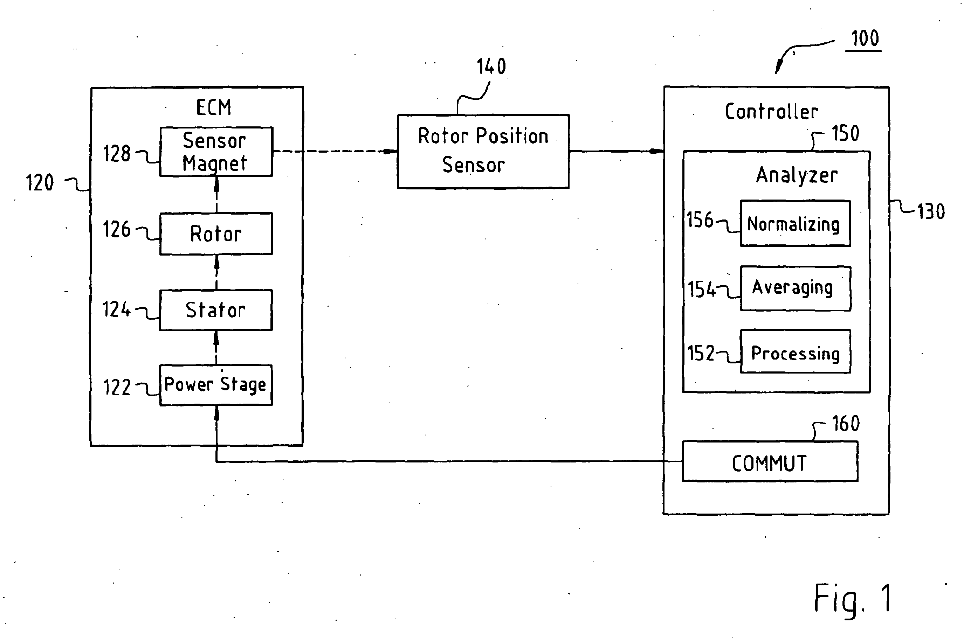

**Fig. 1** zeigt ein Blockdiagramm, welches die prinzipielle Funktionsweise einer Vorrichtung 100 zum Betrieb eines ECM 120 mit einer Rotorstellungssensoranordnung gemäß der vorliegenden Erfindung illustriert. Die Rotorstellungssensoranordnung ist einerseits zur Erzeugung von Rotorstellungssignalen und andererseits zur Bestimmung von Absolutwerten für die Rotorstellung des ECM 120 aus den erzeugten Rotorstellungssignalen ausgebildet.

Gemäß einer Ausführungsform der vorliegenden Erfindung umfasst die Vorrichtung 100 einen ECM 120 mit einem Rotor 126, welcher einen Sensormagnet 128 (Sensor Magnet) aufweist, und einem Stator 124 mit mindestens einem Statorstrang. Dem ECM 120 ist eine Endstufe 122 (Power Stage) zur Beeinflussung des Motorstroms in dem mindestens einen Statorstrang des Stators 124 zugeordnet.

Die Vorrichtung 100 umfasst eine Steuerung 130 (Controller), welche zweckmäßig als Mikrocontroller ausgebildet ist, und welche mit dem ECM 120 verbunden ist. Die Steuerung 130 umfasst eine Kommutierungssteuerung 160 (COMMUT) und ist eingangsseitig mit mindestens einem Rotorstellungssensor 140 (Rotor Position Sensor) verbunden, welcher dem ECM 120 zugeordnet ist. Die Kommutierungssteuerung 160 erzeugt Kommutierungssignale für die Endstufe 122 des ECM 120 in Abhängigkeit von Rotorstellungssignalen, welche von dem Rotorstellungssensor 140 bereitgestellt werden.

Die Endstufe 122 umfasst eine Einrichtung 150 zur Ermittlung der Rotorstellung (Analyzer) mit einer Normierungseinheit 156 (Normalizing), einer Mittelungseinheit 154 (Averaging) und einer Verarbeitungseinheit 152 (Processing). Die Einrichtung 150 bildet zusammen mit dem Rotorstellungssensor 140 eine dem Sensormagneten 128 die erfindungsgemäße Rotorstellungssensoranordnung.

Der Rotorstellungssensor 140 ist vorzugsweise ein analoger Rotorstellungssensor. Die Erfindung ist hierbei jedoch nicht auf einen bestimmten Rotorstellungssensortyp beschränkt, vielmehr können verschiedene Arten von Rotorstellungssensoren verwendet werden. Beispielsweise können analoge Hallsensoren, wie z.B. analoge Hallsensoren vom Typ A1321, AMR-Hallsensoren oder GMR- (Giant Magneto Resistor) Sensoren als Rotorstellungssensoren Anwendung finden. Auch können programmierbare Sensoren, z.B. vom Typ Sentron 2SA-10, verwendet werden.

Im Betrieb der Vorrichtung 100 wird dem mindestens einen Statorstrang des Stators 124 des ECM 120 eine Betriebsspannung zugeführt. Hierbei werden die durch den mindestens einen Statorstrang fließenden Ströme durch die von der Kommutierungssteuerung 160 der Endstufe 122 bereit gestellten Kommutierungssignale derart gesteuert, dass der Rotor 126 sich mit einer bestimmten Drehzahl ω dreht.

Die Drehung des Rotors 126 bewirkt eine Drehung des Sensormagneten 128 mit derselben Drehzahl ω, mit der sich der Rotor 126 dreht, wobei von dem Rotorstellungssensor 140 Rotorstellungssignale erzeugt werden. Diese werden der Einrichtung 150 zugeführt, welche dazu dient, zu jedem Zeitpunkt aus dem aktuellen Rotorstellungssignal einen Absolutwert für die Drehstellung des Rotors 126 zu bestimmen.

Gemäß einer bevorzugten Ausführungsform der Erfindung werden die Absolutwerte für die Rotorstellung des Rotors 126 von der Kommutierungssteuerung 160 im Controller 130 bei der Erzeugung von geeigneten Kommutierungssignalen verwendet, um eine für eine Drehung des Rotors 126 mit der bestimmten Drehzahl _ erforderliche elektromagnetische Wechselwirkung zwischen dem mindestens einen Strang des Stators 124 und dem Rotor 126 zu bewirken.

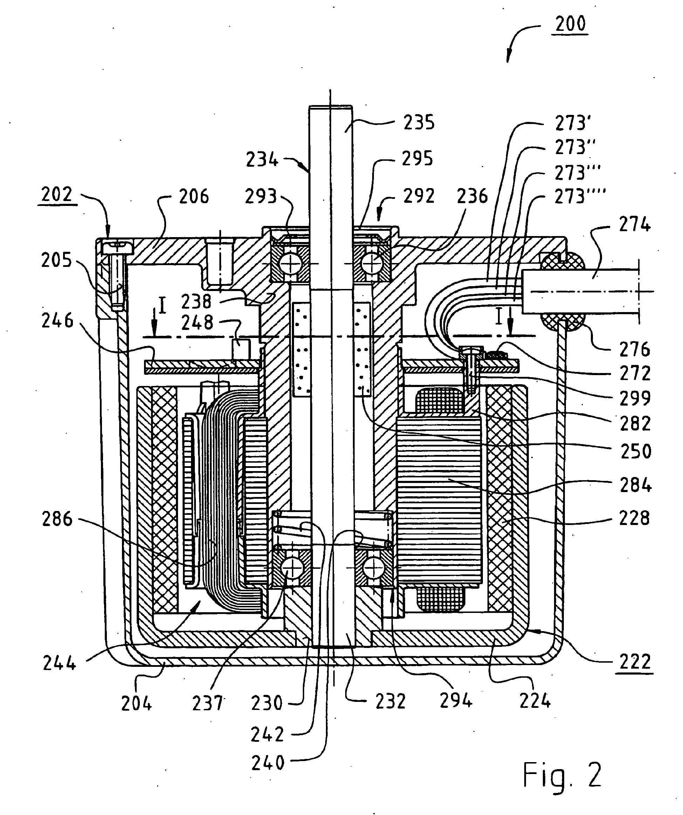

Die Funktionsweise der Vorrichtung 100 zur Bestimmung von Absolutwerten für die Rotorstellung des Rotors 126 wird unten stehend unter Bezugnahme auf die Fig. 2 bis 9 weiter beschrieben.

**Fig. 2** zeigt einen vergrößerten Längsschnitt durch einen Außenläufermotor 200, welcher zum Antrieb eines (nicht dargestellten) externen Bauteils, beispielsweise eines Lüfterrades, dient. Wie aus Fig. 2 ersichtlich ist, ist der Motor 200 in einem Gehäuse 202 angeordnet, welches ein im Wesentlichen zylindrisches Gehäuseteil 204 aufweist, an dessen oberem Ende ein Befestigungsflansch 206 durch mindestens eine Schraube 205 befestigt ist.

Der Motor 200 hat einen Außenrotor 222 mit einer Rotorglocke 224, welche auf ihrer Innenseite einen radial magnetisierten Rotormagneten 228 aufweist. Der Rotormagnet 228 hat n Polpaare, wobei n = 1, 2, ... ist.

Die Rotorglocke 224 ist mit einem Boden 230 versehen, in dem ein unteres Wellenende 232 einer Rotorwelle 234 befestigt ist, deren oberes, freies Wellenende mit 235 bezeichnet ist. Mit dem oberen, freien Wellenende 235 kann das externe Bauteil angetrieben werden. Deshalb wird das obere, freie Wellenende 235 nachfolgend auch als das "Antriebsende" der Welle 234 bezeichnet. Die Rotorglocke 224 und der Boden 230 sind vorzugsweise einstückig ausgebildet, wobei das untere Wellenende 232 durch Zamak-Spritzen in dem Boden 230 befestigt werden kann. Das untere Wellenende 232 kann ebenfalls zum Antrieb genutzt werden. Hierzu wird in dem Gehäuseteil 204 im Bereich des unteren Wellenendes 232 eine - nicht dargestelite - Öffnung angebracht. Ein Vorteil der erfindungsgemäßen Sensoranordnung besteht darin, dass unabhängig vom Motortyp keines der Wellenenden durch die Sensoranordnung belegt wird.

In dem in Fig. 2 dargestellten Ausführungsbeispiel ist die Rotorwelle 234 fast vollständig, d.h. mit Ausnahme des Antriebsendes 235, in einem magnetisch durchlässigen Lagerrohr 238 gelagert, welches bevorzugt einstückig mit der Befestigungsflansch 206 ausgebildet ist. Zur radialen Lagerung der Welle 234 dienen ein an der A-Seite des Motors 200 angeordnetes oberes Wälzlager 236 und ein an der B-Seite des Motors 200 angeordnetes unteres Wälzlager 237. Das obere Wälzlager 236 ist in eine Ausnehmung 292 in der Befestigungsflansch 206 eingepresst und wird dort von einem Haltering 293 gehalten, welcher von einem Dichtring 295 abgedeckt wird. Das untere Wälzlager 237 ist in einer Ausnehmung 294 am unteren Ende des Lagerrohres 238 durch Einpressen befestigt, und sein Außenring liegt mit dem oberen Ende 240 (in Fig. 2) gegen eine im Lagerrohr 238 angeordnete Druckfeder 242 an.

Auf der Außenseite des Lagerrohres 238 ist der Innenstator 244 des Motors 200 befestigt. Der Innenstator 244 umfasst einen Statorträger 282 mit einem Statorblechpaket 284 und einer Statorwicklung 286. Am oberen Ende des Statorträgers 282 ist eine Leiterplatte 246 angeordnet, welche über eine Schraube 299 an dem Statorträger 282 befestigt ist und zur Aufnahme der Motorelektronik dient.

Auf der Leiterplatte 246 ist eine Anschlussverbindung 272 dargestellt, welche zum elektrischen Anschluss der Motorelektronik über biegsame Einzelleitungen 273', 273", 273" und 273"' dient, welche in einer Leitung 274 gebündelt sind. Die Leitung 274 wird über eine Dichtung 276 aus dem Gehäuseteil 204 geführt.

Auf der Leiterplatte 246, und somit im Bereich außerhalb des Lagerrohrs 238, ist mindestens ein Rotorstellungssensor 248 angeordnet. Er dient zur Erzeugung von Rotorstellungssignalen in Abhängigkeit von der Drehstellung eines Magnetrings 250, welcher drehfest auf der Rotorwelle 234 angeordnet ist und vorzugsweise nicht lösbar an dieser befestigt ist.

Gemäß Fig. 2 ist der Magnetring 250 in axialer Richtung der Rotorwelle 234 im Wesentlichen auf gleicher Höhe wie der Rotorstellungssensor 248 angeordnet. Der Magnetring 250 ist in axialer Richtung der Welle 234 von dem Rotormagnet 228 beabstandet, um eine Beeinflussung des Rotorstellungssensors 248 bei der Erzeugung der Rotorstellungssignale durch das Streufeld des Rotormagneten 228 zu verhindern. Hierbei sind der Magnetring 250 und der Rotormagnet 228 vorzugsweise derart relativ zueinander angeordnet, dass jeder Polübergang des Magnetrings 250 einem Polübergang des Rotormagneten 228 entspricht.

Gemäß einer bevorzugten Ausführungsform der Erfindung ist der Magnetring 250 derart magnetisiert, dass er maximal n Polpaare aufweist, wobei n wie oben beschrieben die Anzahl der Polpaare des Rotormagneten 228 ist. Hierbei ist der Magnetring 250 vorzugsweise polorientiert magnetisiert, d.h. diametral oder sinusförmig, so dass sich an seinem äußeren Umfang ein im Wesentlichen sinusförmiger magnetischer Flussverlauf ergibt.

Die Anzahl und Anordnung des bzw. der Rotorstellungssensoren 248 ist auf die Anzahl und Magnetisierung der Polpaare des Magnetrings 250 abgestimmt, um die Eindeutigkeit der Rotorstellungssignale für die Steuerung der Bestromung der Statorwicklung 286 zu gewährleisten. Beispielsweise sind bei der Verwendung von zwei analogen Hallsensoren diese bevorzugt in einem Abstand von 90° el. zueinander angeordnet. Für den Fall, dass der Magnetring 250 hierbei nur ein Polpaar aufweist, müssen die Hallsensoren somit in einem Abstand von 90° mech. zueinander angeordnet sein. Bei einem Magnetring 250 mit zwei Polpaaren ergibt sich für die Hallsensoren ein Abstand von 45° mech., usw. Der Abstand des bzw. der Rotorstellungssensoren 248 von dem Magnetring 250 kann in Abhängigkeit von der Magnetisierung des Magnetrings 250 über einen relativ großen Luftspalt mehr als 10 mm betragen.

Wie aus Fig. 2 ersichtlich ist, schließt der Rotormagnet 228 an seiner Ober- und Unterseite mit den oberen bzw. unteren Seiten der Statorwicklung 286 ab. Allerdings kann hierdurch an dem mindestens einen Rotorstellungssensor 248 das Streufeld des Rotormagneten 228 wirken und somit das Rotorstellungssignal verfälschen. Um nun eine Beeinflussung des mindestens einen Rotorstellungssensors 248 bei der Erzeugung der Rotorstellungssignale durch das Streufeld des Rotormagneten 228 zu verhindern, kann der Rotormagnet 228 alternativ in seiner Höhe derart verkürzt werden, dass seine Ober- und Unterseite mit den oberen bzw. unteren Seiten des Statorblechpakets 284 abschließen.

Das Lagerrohr 238 muss so ausgebildet sein, dass es die Messung des durch den Sensormagneten 250 erzeugten Magnetfelds am Ort des Rotorstellungssensors 248 außerhalb des Lagerrohrs ermöglicht. Hierzu ist es bevorzugt zumindest im Bereich zwischen dem Rotorstellungssensor 248 und dem Sensormagneten 250 aus einem magnetisch durchlässigen Material ausgebildet.

### Arbeitsweise

Im Betrieb des Außenläufermotors 200 wird eine Versorgungsspannung zur Bestromung der Statorwicklung 286 an eine dem Motor 200 zugeordnete Endstufe, z.B. die Endstufe 122 von Fig. 1, angelegt. Die Versorgungsspannung ist vorzugsweise eine im Wesentlichen konstante Gleichspannung, welche von einem Netzgerät oder einer Batterie erzeugt wird, und durch die elektromagnetische Wechselwirkung zwischen der Statorwicklung 286 und dem Rotormagneten 228 in Drehungen des Außenrotors 222, und somit der Rotorwelle 234 und des Magnetrings 250, umgewandelt wird.

Bei der Drehung des Magnetrings 250 ändert sich in Abhängigkeit vom magnetischen Flussverlauf am äußeren Umfang des Magnetrings 250 kontinuierlich das auf den Rotorstellungssensor 248 wirkende Magnetfeld, sodass der Rotorstellungssensor 248 sinus- bzw. kosinusförmige Rotorstellungssignale erzeugt. Aus diesen Rotorstellungssignalen werden erfindungsgemäß Absolutwerte für die Rotorstellung des Außenrotors 222 bestimmt.

Zur Bestimmung der Absolutwerte werden die Rotorstellungssignale bevorzugt periodenweise oder durch Periodenmittelwerte normiert, damit Abweichungen der Rotorstellungssignale von entsprechenden Sollwerten nicht zu Fehlern bei der Berechnung des Rotorstellungswinkels führen. Dieser Normierungsschritt wird von einer geeigneten Normierungseinheit, z.B. der Normierungseinheit 156 aus Fig. 1, durchgeführt. Die normierten Rotorstellungssignale werden von einer Einheit zur Mittelwertbildung, z.B. der Mittelungseinheit 154 aus Fig. 1, gemittelt, um die Messgenauigkeit zu vergrößern und die Güte der resultierenden Signale zu verbessern. Die resultierenden Signale werden von einer Verarbeitungseinheit, z.B. Verarbeitungseinheit 152 aus Fig. 1, in Absolutwerte für den Rotorstellungswinkel und z. B. für die Rotorstellung des Außenrotors 222 umgewandelt. Geeignete Aufbereitungsverfahren für die Rotorstellungssignale sind beispielsweise in der WO 2004/059830 A2 beschrieben und werden hier nicht näher erläutert.

Gemäß einer bevorzugten Ausführungsform der Erfindung werden die Absolutwerte für die Rotorstellung des Außenrotors 222 zur Erzeugung von Kommutierungssignalen, z.B. durch die Kommutierungssteuerung 160 des Controllers 130 aus Fig. 1, verwendet. Die Kommutierungssignale dienen zur Steuerung der durch die Statorwicklung 286 fließenden Ströme. Vorteilhafterweise ist hier keine Initialisierungsphase erforderlich, bei welcher der Rotor 222 in einen definierten Ausgangszustand gedreht wird, um eine anfängliche Rotorstellung einem absoluten elektrischen Winkel des Rotormagneten 228 zuzuordnen, welcher für die Kommutierung erforderlich ist. Vielmehr ist zu jedem Zeitpunkt der Absolutwert der Rotorstellung bekannt, sodass auch der absolute elektrische Winkel des Rotormagneten 228, welcher zur Kommutierung notwendig ist, jederzeit bekannt ist. Somit kann auf die Initialisierungsphase verzichtet werden, da zur Erzeugung der Kommutierungssignale auf die Absolutwerte zurückgegriffen wird.

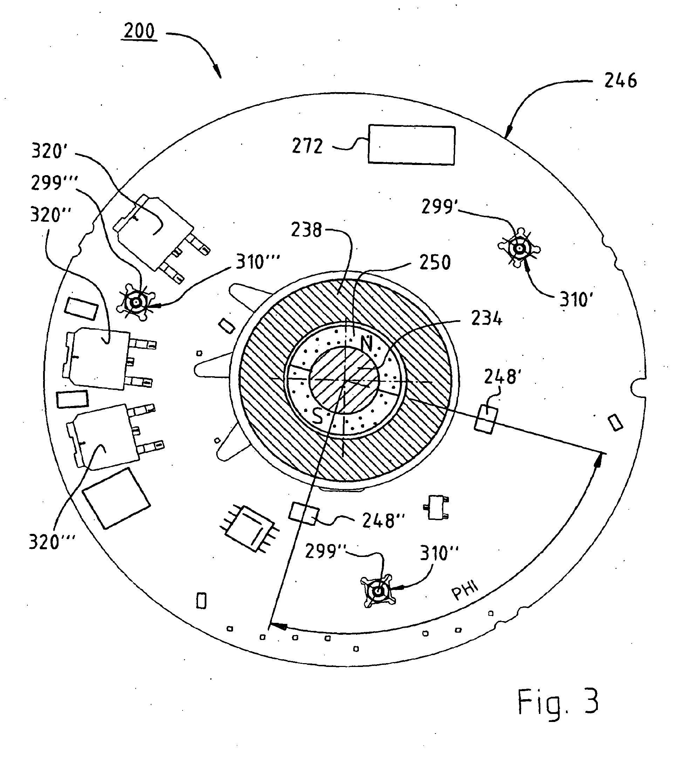

**Fig. 3** zeigt einen Schnitt durch eine bevorzugte Ausführungsform des Außenläufermotors 200 mit einem zweipoligen Magnetring 250 entlang der Linie I - I der Fig. 2 in vergrößertem Maßstab. Die Anzahl n der Polpaare des Magnetrings 250 in Fig. 3 ist n =1. Der zweipolige Magnetring 250 ist, wie bei Fig. 2 beschrieben, drehfest auf der Rotorwelle 234 und zumindest teilweise innerhalb des Lagerrohrs 238 angeordnet.

Wie Fig. 3 klar zeigt, ist die Leiterplatte 246 mit drei Schrauben 299', 299", 299"', welche durch entsprechende Bohrungen 310', 310", 310" durchgeführt sind, an dem nicht sichtbaren Statorträger 282 befestigt. Die auf der Oberseite der Leiterplatte (vgl. Fig. 2) angeordnete Motorelektronik umfasst beispielhaft die Anschlussverbindung 272 und schematisch dargestellte Leistungs-MOSFETs 320', 320", 320'".

Auf der Oberseite der Leiterplatte 246 sind zwei Hallsensoren 248', 248", z.B. analoge SMD-Hallsensoren, in einem Winkel PHI zueinander angeordnet. Da der Magnetring 250 gemäß Fig. 3 zweipolig ist, beträgt dieser Winkel PHI wie oben beschrieben 90° el., so dass die beiden Hallsensoren in einem Abstand von 90° mech. zueinander angeordnet sind.

**Fig. 4** zeigt eine perspektivische Ansicht eines beispielhaften Magnetrings 400, welcher gemäß einer ersten Ausführungsform der Erfindung zur Realisierung des Magnetrings 250 von den Fig. 2 und 3 geeignet ist.

Wie aus Fig. 4 ersichtlich ist, hat der Magnetring 400 eine im Wesentlichen zylindrische Form und ist diametral magnetisiert, d.h. der Magnetring 400 weist ein Magnetpolpaar bzw. zwei Magnetpole auf, einen Nordpol 410 (N) und einen Südpol 420 (S). Der magnetische Flussverlauf zwischen dem Südpol 420 und dem Nordpol 410 ist durch magnetische Feldlinien 430', 430", 430'" dargestellt, welche zur Verdeutlichung einer diametralen Magnetisierung dienen.

Es wird jedoch darauf hingewiesen, dass der Nordpol 410 und der Südpol 420 des Magnetrings 400 im Wesentlichen ein kugelförmiges Magnetfeld bilden. Somit ergibt sich am äußeren Umfang des Magnetrings 400 ein im Wesentlichen sinusförmiger magnetischer Flussverlauf. Da die Ausrichtung des Magnetfeldes am äußeren Umfang des Magnetrings 400 an jedem Magnetpol jeweils einen eindeutigen Rückschluss auf die jeweilige Rotorstellung zulässt, beruht bei Verwendung des Magnetrings 400 als Sensormagnet die Erzeugung von geeigneten Rotorstellungssignalen durch die jeweils verwendeten Rotorstellungssensoren, z.B. die Rotorstellungssensoren 248', 248" von Fig. 3, bevorzugt auf der Ausrichtung bzw. Richtung des Magnetfeldes. Hierbei muss der Abstand zwischen den Rotorstellungssensoren 248', 248" und dem Magnetring 400 geeignet gewählt werden.

**Fig. 5** zeigt eine schematische Darstellung des Magnetfeldes eines Magnetrings 500, welcher gemäß einer bevorzugten Ausführungsform zur Realisierung des Magnetrings 250 von den Fig. 2 und 3 geeignet ist.

Der Magnetring 500 ist vierpolig ausgeführt und in Draufsicht gezeigt. Er hat zwei Magnetpolpaare, nämlich zwei Nordpole 510, 520 (N) und zwei Südpole 530, 540 (S). Der Magnetring 500 ist erfindungsgemäß sinusförmig magnetisiert, so dass sich am äußeren Umfang des Magnetrings 500 ein im Wesentlichen sinusförmiger magnetischer Flussverlauf ergibt. Der magnetische Flussverlauf zwischen den einzelnen Magnetpolen des Magnetrings 500 ist durch entsprechende magnetische Feldlinien angedeutet. Z.B. ist der magnetische Flussverlauf zwischen dem Südpol 540 und dem Nordpol 520 durch magnetische Feldlinien 550 abgebildet. Bezogen auf das Zifferblatt einer Uhr hat der Nordpol 510 sein Maximum in der 12-Uhr-Stellung, der Südpol 540 in der 3-Uhr-Stellung, etc.

Bei Verwendung des Magnetrings 500 als Sensormagnet beruht die Erzeugung von geeigneten Rotorstellungssignalen durch die jeweils verwendeten Rotorstellungssensoren, z.B. die Rotorstellungssensoren 248', 248" aus Fig. 3, bevorzugt auf der Auswertung der Intensität des Magnetfeldes. Hierbei ist der Abstand zwischen den Rotorstellungssensoren 248', 248" und dem Magnetring 400 eher unkritisch

Der Magnetring 500 hat bevorzugt eine im Wesentlichen zylindrische Form. Als Magnetwerkstoff ist beispielsweise Hartferrit-Compound 13/22p nach DIN 17 410 geeignet.

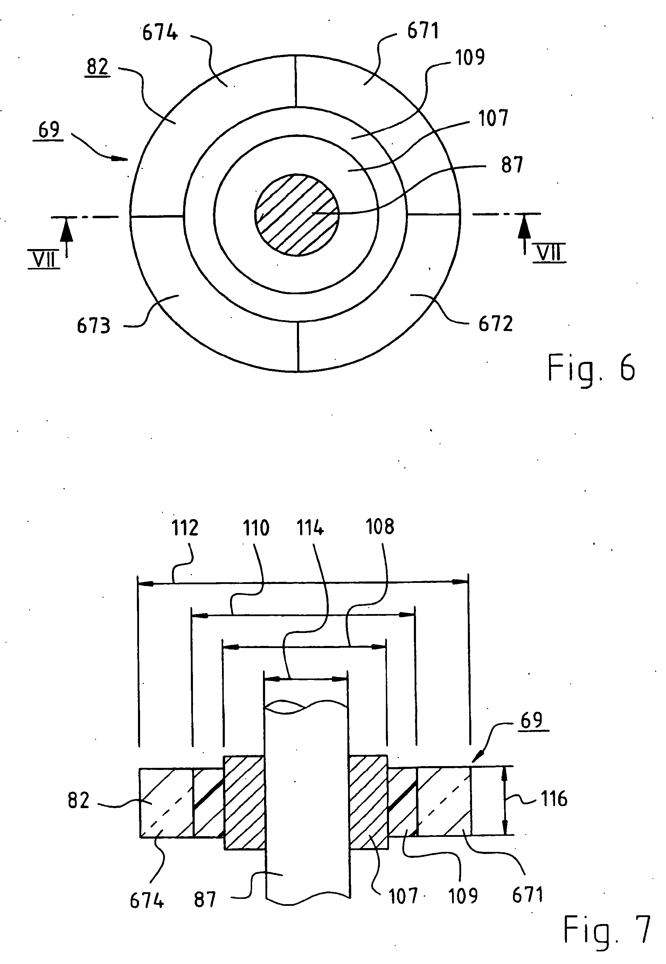

**Fig. 6** zeigt eine Draufsicht auf eine Sensormagnetringanordnung 69, wie sie sowohl bei Innenläufern als auch bei Außenläufern verwendet werden kann, und **Fig. 7** einen Schnitt durch die Sensormagnetringanordnung 69, wobei die Sensormagnetringanordnung 69 auf einer Welle 87 angeordnet ist. Die Sensormagnetringanordnung 69 weist den Sensormagneten 82 mit den vier Sensorpolen 671, 672, 673 und 674, einen Metallring 107 und einen Kunststoffring 109 auf, welcher die Sensorpole 671 bis 674 mit dem Metallring 107 verbindet.

Der Metallring 107 sitzt auf der Welle 87 und ist mit dieser drehfest verbunden. Bevorzugt wird für den Metallring 107 Messing verwendet. Der Kunststoff 109 wird beispielsweise über ein Spritzgussverfahren zwischen den Metallring 107 und den Sensormagneten 82 gebracht, um diese zu verbinden und gleichzeitig einen Ausgleich für durch thermische Ausdehnung entstehende Spannungen zu ermöglichen, die ansonsten zu einer Sprengung des Sensormagneten 82 führen könnten.

Der Außendurchmesser des Sensormagneten 82 ist mit 112 bezeichnet, und er beträgt beispielsweise 37 mm. Der Außendurchmesser liegt bevorzugt im Bereich 15 mm bis 50 mm, weiter bevorzugt im Bereich 20 bis 40 mm.

Der Innendurchmesser des Sensormagneten 82 bzw. der Außendurchmesser des Kunststoffrings 109 ist mit 110 bezeichnet. Die Länge 110 beträgt beispielsweise 27 mm.

Der Innendurchmesser des Kunststoffrings 109 bzw. der Außendurchmesser des Metallrings 107 ist mit 108 bezeichnet. Die Länge 108 beträgt beispielsweise 20 mm.

Der Durchmesser der Welle 87 ist mit 114 bezeichnet, und er beträgt beispielsweise 8 mm. Bevorzugte Werte für den Durchmesser 114 der Welle liegen im Bereich 5 mm bis 15 mm, es sind jedoch je nach Motorgröße größere und kleinere Durchmesser möglich.

Der Innendurchmesser des Metallrings 107 ist bevorzugt so gewählt, dass eine gute Verbindung mit der Welle 87 entsteht. Die Verwendung eines inneren Metallrings 107 ist vorteilhaft, da der Sensormagnet 82 in einer oder mehreren Standardgrößen gefertigt werden kann und die Anpassung des Sensormagnetrings 69 an die Welle 87 über eine in der Herstellung günstige Änderung des Innendurchmessers 114 des Metallrings 107 erfolgen kann.

Die Breite des Magnetmaterials 71 bis 74 ist mit 116 bezeichnet, und die Breite 116 für einen Sensormagneten beträgt beispielsweise 7 mm. Die Breite für einen reinen Sensormagneten, der also nicht gleichzeitig als Rotormagnet dient, liegt bevorzugt im Bereich 3 mm bis 20 mm, weiter bevorzugt im Bereich 5 mm bis 15 mm, und besonders bevorzugt im Bereich 6 mm bis 12 mm.

Die Sensorpolzahl SP beträgt bevorzugt SP = 2, 4, 6 oder 8 und besonders bevorzugt SP = 2 oder 4.

In Anwendungsfällen, in denen der Sensormagnetring 69 in einer korrosiven Umgebung angeordnet ist, kann der Sensormagnet 82 zusätzlich von einem - bevorzugt magnetisch nichtleitenden - korrosionsbeständigen Material umgeben werden. So ist es beispielsweise möglich, den Sensormagneten in magnetisch nichtleitendem Edelstahl einzuschweißen. Mit einem solchen Sensormagnetring 69 kann beispielsweise ein Nassläufer realisiert werden, bei dem die Welle von Kühlflüssigkeit umgeben ist.

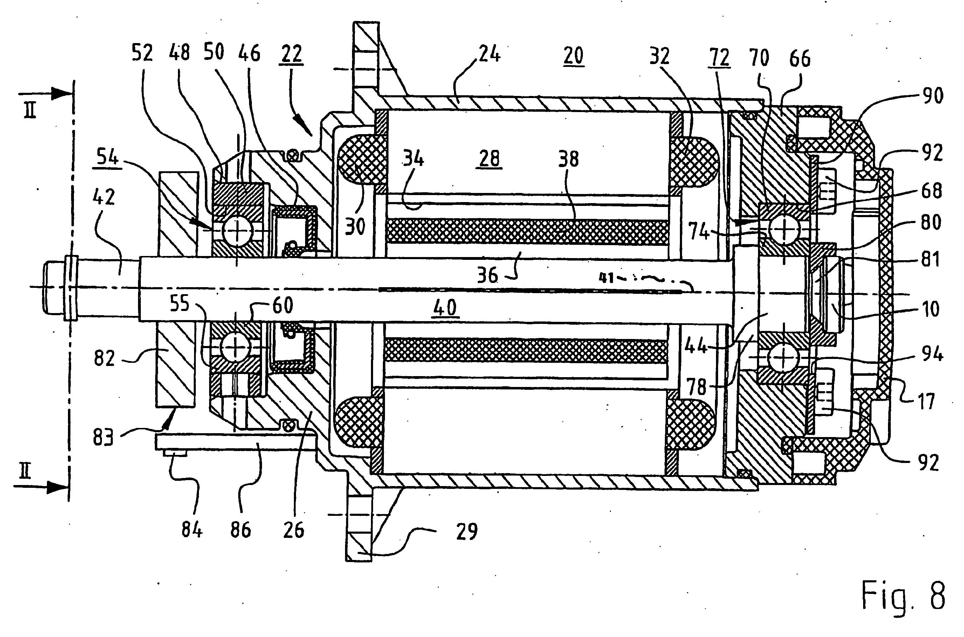

**Fig. 8** zeigt einen vergrößerten Längsschnitt durch einen elektronisch kommutierten Innenläufermotor 20, welcher zum Antrieb eines (nicht dargestellten) externen Bauteils, beispielsweise eines Lüfterrades, dient. Der Innenläufermotor 20 hat ein Gehäuse 22, welches ein zylindrisches Gehäuseteil 24, ein A-Lagerschild 26 sowie einen Befestigungsflansch 29 auf der A-Seite des Motors 20, und ein B-Lagerschild 66 sowie einen Gehäusedeckel 17 auf der B-Seite des Motors 20 aufweist.

Im zylindrischen Gehäuseteil 24 ist das Blechpaket eines Außenstators 28 angeordnet, dessen Wickelköpfe bei 30 und 32 angedeutet sind. Der Stator 28 hat eine Innenausnehmung 34, in der ein Rotor 36 mit einem deren Drehachse mit 41, Rotormagnet 38 auf einer Rotorwelle 40 angeordnet ist, deren Drehachse mit 41, deren Antriebsende mit 42 und deren inneres Wellenende mit 44 bezeichnet ist. Der Rotormagnet hat n Polpaare, wobei n = 1, 2, ... ist. Ein solcher Motor kann auch als permanent erregte Synchron-Innenläufermaschine bezeichnet werden.

Im rechten, offenen Ende des zylindrischen Gehäuseteils 24 ist das B-Lagerschild 66 befestigt. Dieses hat eine Ausnehmung 68 für ein Wälzlager 72 mit einem Außenring 70 und einem Innenring 74. Der Innenring 74 ist auf dem Wellenende 44 befestigt. Hierzu hat die Rotorwelle 40 einen Ringbund 78, mit dessen rechter Schulter sie gegen die linke Seite des Innenrings 74 anliegt. Gegen seine rechte Seite liegt ein Formstück 80 an, das durch den Senkkopf 81 eines Halteglieds 10 in Richtung zur Rotorwelle 40 gepresst wird und das etwa ringförmig ausgebildet ist. Das Formstück 80 dient zur Fixierung des Innenrings 74 auf der Rotorwelle 40.

Zum sicheren Einspannen des Außenrings 70 dient ein flaches, ringförmiges Teil 90, das durch eine Mehrzahl von Schrauben 92, bevorzugt drei gleichmäßig verteilte Schrauben, an seiner äußeren Peripherie am B-Lagerschild 66 befestigt ist und das mit seinem radial inneren Teil 94 gegen den Außenring 70 anliegt und diesen nach links presst. (Die Ausnehmung 68 ist etwas kürzer als der Außenring 70.)

Im A-Lagerschild 26 ist in üblicher Weise eine Dichtung 46 für die Rotorwelle 40 vorgesehen. Ferner befindet sich dort eine Ausnehmung 48, in der ein Ring 50 befestigt ist. Der Ring 50 umgibt einen Außenring 55 eines Wälzlagers 54. Der Innenring 60 des Wälzlagers 54 ist auf die Rotorwelle 40 aufgepresst.

An dem A-Lagerschild 26 ist eine Leiterplatte 86 befestigt, welche im Wesentlichen parallel zur Rotorwelle 40 angeordnet ist. Auf der Unterseite der Leiterplatte 86 befindet sich mindestens ein Rotorstellungssensor 84, welcher zur Erzeugung von Rotorstellungssignalen in Abhängigkeit von der Drehstellung eines Magnetrings 82 dient. Der Magnetring 82 ist hier zwischen dem Wälzlager 54 und dem Antriebsende 42 drehfest auf der Rotorwelle 40 angeordnet und vorzugsweise nicht lösbar mit der Welle 40 verbunden. Der Magnetring 82 ist bevorzugt derart magnetisiert, dass er maximal n Polpaare hat, wobei n die Polpaarzahl des Rotormagneten 38 ist, und sich an seinem Umfang 83 ein im Wesentlichen sinusförmiger magnetischer Flussverlauf ergibt.

Gemäß Fig. 8 ist der Magnetring 82 in axialer Richtung der Rotorwelle 40 im Wesentlichen auf gleicher Höhe wie der mindestens eine Rotorstellungssensor 84 angeordnet. Der Magnetring 82 hat bevorzugt, bezogen auf die axiale Richtung der Welle 40, einen Abstand vom Rotormagneten 38, um eine Beeinflussung des Rotorstellungssensors 84 bei der Erzeugung der Rotorstellungssignale durch das Streufeld des Rotormagneten 38 zu verhindern. Hierbei sind der Magnetring 82 und der Rotormagnet 38 vorzugsweise derart relativ zueinander angeordnet, dass jeder Polübergang des Magnetrings 82 einem Polübergang des Rotormagneten 38 entspricht.

Die Anordnung des bzw. der Rotorstellungssensoren 84 ist auf die Anzahl und Magnetisierung der Polpaare des Magnetrings 82 abgestimmt, um die Eindeutigkeit der Rotorstellungssignale für die Steuerung der Bestromung des Stators 28 zu gewährleisten. Beispielsweise sind bei der Verwendung von zwei analogen Hallsensoren diese bevorzugt in einem Abstand von 90° el. zueinander angeordnet. Für den Fall, dass der Magnetring 82 hierbei nur ein Polpaar aufweist, müssen die Hallsensoren somit in einem Abstand von 90° mech. zueinander angeordnet sein. Bei einem Magnetring 82 mit zwei Polpaaren ergibt sich für die Hallsensoren ein Abstand von 45° mech., usw. Der Abstand des bzw. der Rotorstellungssensoren 84 von dem Magnetring 82 kann in Abhängigkeit von der Magnetisierung des Magnetrings 82 erfindungsgemäß über einen relativ großen Luftspalt mehr als 10 mm betragen. Der Aufbau und die Magnetisierung des Magnetrings 82 ist analog zu den bei den Fig. 4 bis 7 beschriebenen Ausführungsformen und wird deshalb hier nicht weiter beschrieben.

Die Arbeitsweise des Innenläufermotors 20 ist analog zu der Arbeitsweise des Außenläufermotors 200 aus Fig. 2. Die Steuerung der Kommutierung sowie die Erzeugung von Rotorstellungssignalen und die Bestimmung von Absolutwerten für die Rotorstellung des Rotors 36 des Innenläufermotors 20 erfolgen ebenfalls analog zu denjenigen des Außenläufermotors 200 aus Fig. 2. Deshalb werden die Arbeitsweise des Innenläufermotors 20, die Steuerung der Kommutierung, sowie die Erzeugung von Rotorstellungssignalen und die Bestimmung von Absolutwerten für den Innenläufermotor 20 hier nicht weiter beschrieben.

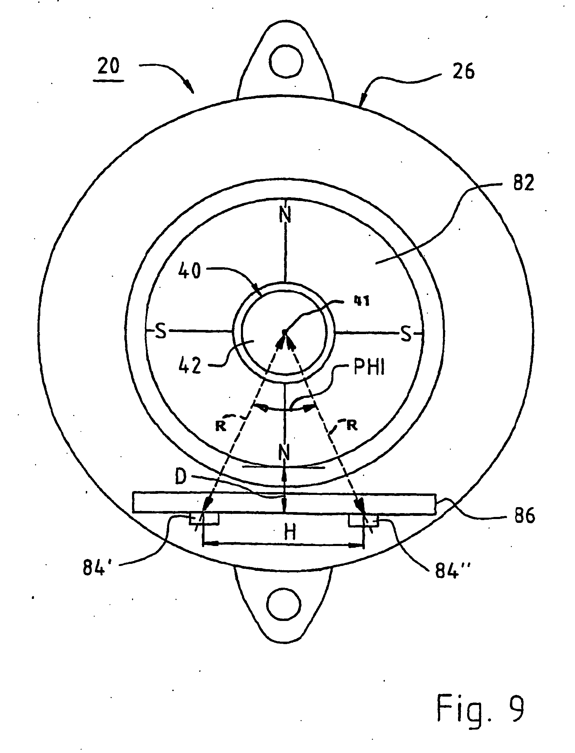

**Fig. 9** zeigt einen Schnitt durch eine bevorzugte Ausführungsform des Innenläufermotors 20 mit einem vierpoligen Magnetring 82 entlang der Linie II - II in Fig. 8 in vergrößertem Maßstab. Die Anzahl n der Polpaare des Magnetrings 82 in Fig. 9 ist n=2. Der vierpolige Magnetring 82 ist, wie bei Fig. 8 beschrieben, zwischen dem Antriebsende 42 und dem A-Lagerschild 26 drehfest auf der Rotorwelle 40 angeordnet.

Wie aus Fig. 9 klar ersichtlich ist, sind die Ober- und Unterseite der Leiterplatte 86 im Wesentlichen parallel zur axialen Ausrichtung der Rotorwelle 40 angeordnet und an dem A-Lagerschild 26 befestigt. Auf der Unterseite der Leiterplatte 86 sind beispielhaft zwei Rotorstellungssensoren 84', 84" vorgesehen.

Im Folgenden werden beispielhafte Werte für einzelne Komponenten des Innenläufermotors 20 mit dem vierpoligen Magnetring 82 gemäß einer bevorzugten Ausführungsform angegeben:

| | |
|---|---|
| Abstand D (Unterseite Leiterplatte 86 zu Außenseite Magnetring 82): | 10 mm |
| Abstand H (Mitte Sensor 84' zu Mitte Sensor 84", Sensortyp: SMD-Hall): | 19 mm |
| Winkel PHI (Sensor 84' zu Sensor 84"): | 90° el. bzw. 45° mech. |
| Durchmesser Rotorwelle 40: | 6 mm |
| Durchmesser Magnetring 82: | 36,6 mm |

Die beiden Sensoren 84', 84" haben denselben Abstand von der Drehachse 41. Dieser Abstand ist in Fig. 9 mit R bezeichnet.

Naturgemäß sind im Rahmen der vorliegenden Erfindung vielfache Abwandlungen und Modifikationen möglich.

## Patentansprüche

1. Elektromotor, welcher aufweist:
Einen Stator (124);
einen um eine Drehachse (41) drehbaren Rotor (38; 112) mit einer Rotorwelle (40; 232) und einem Rotormagnet (38; 228) mit n Polpaaren;
einen drehfest mit der Welle (40; 232) verbundenen Magnetring (82), welcher maximal n Polpaare aufweist, und derart magnetisiert ist, dass sich an seinem Außenumfang in Umfangsrichtung gesehen ein im Wesentlichen sinusförmiger Verlauf der magnetischen Flussdichte ergibt;
eine Leiterplatte (86), welche im Wesentlichen parallel zur Drehachse (41) des Magnetrings (82) und im Abstand (D) von dessen Außenumfang angeordnet ist und auf welcher zwei analoge Sensoren (84', 84") für die vom Magnetring (82) bei seiner Drehung im Bereich dieser Sensoren (84'; 84") erzeugte Magnetflussdichte im Wesentlichen in derselben Ebene (86) angeordnet sind,
welche analogen Sensoren (84', 84") im Wesentlichen denselben Abstand (R) von der Drehachse (41) haben,
und der Magnetring (82), in radialer Richtung gesehen, mindestens teilweise zwischen der Rotorwelle (40) und den analogen Sensoren (84', 84") angeordnet ist.

2. Elektromotor nach Anspruch 1, bei welchem der Magnetring (82) polorientiert magnetisiert ist.

3. Elektromotor nach Anspruch 2, bei welchem der Magnetring (82) polorientiert lateral magnetisiert ist.

4. Elektromotor nach einem der vorhergehenden Ansprüche, bei welchem zwischen der Welle (40; 87) und dem Magnetring (82) ein elastisches Element (109) angeordnet ist.

5. Elektromotor nach Anspruch 4, bei welchem zwischen dem elastischen Element (109) und der Welle (40; 87) ein Metallring (107) angeordnet ist.

6. Elektromotor nach Anspruch 5, bei welchem der Metallring (107) aus einem nichtmagnetischen Werkstoff ausgebildet ist.

7. Elektromotor nach einem der vorhergehenden Anspruche, bei welchem den beiden analogen Sensoren (84', 84") eine Einrichtung (150) zugeordnet ist, welche dazu ausgebildet ist, aus den Ausgangssignalen dieser beiden Sensoren die augenblickliche absolute Drehstellung des Rotors (126) zu berechnen.

8. Elektromotor nach einem der vorhergehenden Ansprüche, welcher für die Lagerung der Rotorwelle (40; 232) ein Lagerrohr (238) aufweist,
wobei der zur Motorsteuerung dienende Magnetring (82; 250) innerhalb dieses Lagerrohres (238) auf der Motorwelle angeordnet ist,
und die beiden diesem Magnetring zugeordneten analogen Sensoren außerhalb dieses Lagerrohres (238) angeordnet sind,
und zumindest der Bereich des Lagerrohres (238), welcher sich zwischen dem Magnetring und den analogen Sensoren befindet, magnetisch transparent ausgebildet ist.

9. Elektromotor nach Anspruch 8, bei welchem der Rotor (136) einen mit dem Stator (124) zusammenwirkenden Rotormagneten (228) aufweist, welcher auf der Außenseite des Lagerrohres (238) angeordnet ist.

10. Elektromotor nach einem der vorhergehenden Ansprüche, bei welchem die Breite (116) des Magnetrings (82) im Bereich von etwa 3 mm bis etwa 20 mm liegt.

11. Elektromotor nach einem der vorhergehenden Ansprüche, bei welchem der Außendurchmesser (112) des Magnetrings (82) im Bereich von etwa 15 mm bis etwa 50 mm liegt.

12. Elektromotor nach einem der vorhergehenden Ansprüche, bei welchem die analogen Sensoren (84', 84") und der Magnetring (82), bezogen auf die axiale Erstreckung der Rotorwelle (40), etwa auf gleicher axialer Höhe angeordnet sind.

13. Elektromotor nach einem der vorhergehenden Ansprüche, bei welchem eine Einrichtung (150) zur Ermittlung der Drehstellung des Rotors (126) vorgesehen ist, welche Einrichtung dazu ausgebildet ist, aus den Signalen der beiden analogen Sensoren (84', 84") zu jedem Zeitpunkt einen Absolutwert für die Drehstellung des Rotors (126) zu bestimmen.

14. Elektromotor nach Anspruch 13, welcher einen Mikroprozessor (100) aufweist, der zumindest einen Teil der Einrichtung (150) zur Ermittlung des Absolutwerts für die Drehstellung des Rotors (126) bildet.

## Claims

1. Electric motor, which has:
a stator (124);
a rotor (38; 112) rotatable about an axis of rotation (41) with a rotor shaft (40; 232) and a rotor magnet (38; 228) with n pole pairs;
a magnet ring (82) connected in a rotationally fixed manner to the shaft (40; 232), which ring has a maximum of n pole pairs and is magnetised such that a substantially sinusoidal progression of the magnetic flux density results on its outer circumference seen in a circumferential direction;
a printed circuit board (86), which is arranged substantially parallel to the axis of rotation (41) of the magnet ring (82) and at a distance (D) from its outer circumference and on which two analogous sensors (84', 84") are arranged for the magnetic flux density generated by the magnet ring (82) in its rotation in the area of these sensors (84', 84") substantially in the same plane (86),
which analogous sensors (84', 84") have substantially the same spacing (R)from the axis of rotation (41), and the magnet ring (82), seen in a radial direction, is arranged at least partly between the rotor shaft (40) and the analogous sensors (84', 84").

2. Electric motor according to claim 1, in which the magnet ring (82) is magnetised in a pole-oriented manner.

3. Electric motor according to claim 2, in which the magnet ring (82) is magnetised laterally in a pole-oriented manner.

4. Electric motor according to one of the preceding claims, in which an elastic element (109) is arranged between the shaft (40; 87) and the magnet ring (82).

5. Electric motor according to claim 4, in which a metal ring (107) is arranged between the elastic element (109) and the shaft (40; 87).

6. Electric motor according to claim 5, in which the metal ring (107) is formed from a non-magnetic material.

7. Electric motor according to one of the preceding claims, in which assigned to the two analogous sensors (84', 84") is a device (150), which is formed to calculate from the output signals of these two sensors the momentary absolute rotational position of the rotor (126).

8. Electric motor according to one of the preceding claims, which has a support pipe (238) for supporting the rotor shaft (40; 232), wherein the magnet ring (82; 250) used for motor control is arranged inside this support pipe (238) on the motor shaft, and the two analogous sensors assigned to this magnet ring are arranged outside this support pipe (238), and at least the area of the support pipe (238), which is located between the magnet ring and the analogous sensors, is formed to be magnetically transparent.

9. Electric motor according to claim 8, in which the rotor (136) has a rotor magnet (228) interacting with the stator (124), which magnet is arranged on the outside of the support pipe (238).

10. Electric motor according to one of the preceding claims, in which the width (116) of the magnet ring (82) lies in the range from roughly 3 mm to roughly 20 mm.

11. Electric motor according to one of the preceding claims, in which the outer diameter (112) of the magnet ring (82) lies in the range from roughly 15 mm to roughly 50 mm.

12. Electric motor according to one of the preceding claims, in which the analogous sensors (84', 84") and the magnet ring (82) are arranged at roughly the same axial height relative to the axial extension of the rotor shaft (40).

13. Electric motor according to one of the preceding claims, in which a device (150) for determining the rotational position of the rotor (126) is provided, which device is formed to determine an absolute value for the rotational position of the rotor (126) from the signals of the two analogous sensors (84', 84") at any time.

14. Electric motor according to claim 13, which has a microprocessor (100), which forms at least a part of the device (150) for determining the absolute value for the rotational position of the rotor (126).

## Revendications

1. Moteur électrique, qui présente :
un stator (124) ;
un rotor (38 ; 112) rotatif autour d'un axe de rotation (41), avec un arbre de rotor (40 ; 232) et un aimant de rotor (38 ; 228) ayant n paires de pôles ;
un aimant annulaire (82) relié en solidarité de rotation à l'arbre (40 ; 232), aimant qui présente au maximum n paires de pôles et qui est magnétisé de telle sorte qu'on obtient sur sa circonférence extérieure, considéré en direction circonférentielle, une allure sensiblement sinusoïdale de la densité de flux magnétique ;
une carte à circuit imprimé (86), qui est disposée sensiblement parallèlement à l'axe de rotation (41) de l'aimant annulaire (82) et à distance (D) de la circonférence extérieure de ce dernier, et sur laquelle sont disposés, sensiblement dans le même plan (86), deux capteurs analogiques (84', 84") pour la densité de flux magnétique produite dans la région de ces capteurs (84', 84") par l'aimant annulaire (82) lors de sa rotation,
les capteurs analogiques (84', 84") se trouvant sensiblement à la même distance (R) de l'axe de rotation (41),
et l'aimant annulaire (82) étant disposé, considéré en direction radiale, au moins pour partie entre l'arbre de rotor (40) et les capteurs analogiques (84', 84").

2. Moteur électrique selon la revendication 1, dans lequel l'aimant annulaire (82) est magnétisé avec des pôles orientés.

3. Moteur électrique selon la revendication 2, dans lequel l'aimant annulaire (82) est magnétisé avec des pôles orientés latéralement.

4. Moteur électrique selon l'une des revendications précédentes, dans lequel un élément élastique (109) est disposé entre l'arbre (40 ; 87) et l'aimant annulaire (82).

5. Moteur électrique selon la revendication 4, dans lequel une bague métallique (107) est disposée entre l'élément élastique (109) et l'arbre (40 ; 87).

6. Moteur électrique selon la revendication 5, dans lequel la bague métallique (107) est réalisée en un matériau non magnétique.

7. Moteur électrique selon l'une des revendications précédentes, dans lequel un dispositif (150) est associé aux deux capteurs analogiques (84', 84"), dispositif qui est conçu pour calculer, à partir des signaux de sortie de ces deux capteurs, la position de rotation absolue instantanée du rotor (126).

8. Moteur électrique selon l'une des revendications précédentes, qui présente un palier tubulaire (238) pour l'appui de l'arbre de rotor (40 ; 232),
sachant que l'aimant annulaire (82 ; 250) servant à la commande du moteur est disposé à l'intérieur de ce palier tubulaire (238) sur l'arbre du moteur,
que les deux capteurs analogiques associés à cet aimant annulaire sont disposés à l'extérieur de ce palier tubulaire (238),
et qu'au moins la région du palier tubulaire (238) qui se trouve entre l'aimant annulaire et les capteurs analogiques est réalisée magnétiquement transparente.

9. Moteur électrique selon la revendication 8, dans lequel le rotor (136) présente un aimant de rotor (228) qui coopère avec le stator (124) et qui est disposé sur le côté extérieur du palier tubulaire (238).

10. Moteur électrique selon l'une des revendications précédentes, dans lequel la largeur (116) de l'aimant annulaire (82) se situe dans la plage allant d'environ 3 mm jusqu'à environ 20 mm.

11. Moteur électrique selon l'une des revendications précédentes, dans lequel le diamètre extérieur (112) de l'aimant annulaire (82) se situe dans la plage allant d'environ 15 mm jusqu'à environ 50 mm.

12. Moteur électrique selon l'une des revendications précédentes, dans lequel les capteurs analogiques (84', 84") et l'aimant annulaire (82) sont disposés, relativement à l'étendue axiale de l'arbre de rotor (40), environ à la même hauteur axiale.

13. Moteur électrique selon l'une des revendications précédentes, dans lequel il est prévu un dispositif (150) pour déterminer la position de rotation du rotor (126), dispositif qui est conçu pour déterminer à chaque instant, à partir des signaux des deux capteurs analogiques (84', 84"), une valeur absolue pour la position de rotation du rotor (126).

14. Moteur électrique selon la revendication 13, qui présente un microprocesseur (100) qui constitue au moins une partie du dispositif (150) pour déterminer la valeur absolue pour la position de rotation du rotor (126).
